# EUROPEAN PATENT APPLICATION

(11) **EP 1 501 302 A1**
(43) Date of publication of application: **26.01.2005**
(21) Application number: 04103547.8
(22) Date of filing: 23.07.2004
(51) Int. Cl.: H04N 7/10

(54) **Set-Top box including a single tuner for video and data over cable**

(30) Priority: 24.07.2003 US 489718 P
(71) Applicant: TEXAS INSTRUMENTS INCORPORATED, Dallas, Texas 75265 (US)
(72) Inventor: Bitran, Yigal, Tel-Aviv (IL); Zaltsman, Etai, 47400 Ramat-Hasharon (IL); Sherman, Itay, 69362 Tel-Aviv (IL)
(74) Representative: Holt, Michael

(57) **Abstract**

A cable network includes a cable modem termination system at the head end of a cable network, which transmits digitized video data and digitized data, according to a Data Over Cable System Interface Standard (DOCSIS), from sources external to the cable network downstream to a cable subscriber's set-top box over a selected downstream channel. The set-top box includes a single downstream tuner for selecting the digitized video data and DOCSIS data over the selected downstream channel.

## Description

### FIELD OF THE INVENTION

The present invention generally relates to a set-top box including a single tuner for receiving video and data over cable. More particularly, the present invention relates to a cable modem termination system at the head end of a cable network, which may transmit DOCSIS digitized data from a source external to the cable network downstream to a cable subscriber's set-top box over a channel selected by the tuner.

### BACKGROUND OF THE INVENTION

Initially, cable television was a one-way transmission system for the delivery of analog video signals to subscribers through a network of coaxial cables. The initial cable TV networks comprised a network tree architecture, in which analog video signals were transmitted from a head end, operated by the cable TV operator, to individual subscribers via main trunks, subtrunks, and feeders of the network tree. This topology required analog amplifiers to periodically boost the analog video signals to acceptable levels for broadcast over a wide service area. However, the benefits to video signal gain by such amplification were offset by the introduction of noise and distortion directly attributed to the analog amplifiers. Additional noise components of the network were attributable to, for example, cross talk among channels, white noise, electromagnetic interference, and radio frequency interference.

The network cable has the bandwidth capacity to transmit multiple video channels to the subscriber with each single video channel having a bandwidth of, for example, 6.0 MHz in the US or 8.0 MHz in Europe). The 6.0 MHz bandwidth of a single video channel is filtered at the head end of the cable network, producing a bandwidth of approximately 4.5 MHz for the downstream video signal and a sideband. The sideband, i.e., the frequencies on either side of the 4.5 MHz video signal, may provide, for example, a guard band to prevent interference among adjacent video channels or a base band containing, for example, audio information.

The subscriber requires a set-top box that may include several tuners, which allow selection of a single video channel from the ultra high frequency (UHF) band of 470 to 860 MHz, the very high frequency (VHF) high band of 170 to 470 MHz, and the VHF low band of 54 to 170 MHz, respectively, for television viewing.

Digitizing the video signal at the head end allows the cable operator to improve transmission quality by, for example, improving the signal-to-noise ratio, and to increase transmission capacity by hardware and/or software compression of the digitized video signal. For example, the Moving Picture Experts Group (MPEG) 2 standard provides an algorithmic means of compressing the digitized video signal, such that, as many as 10 to 12 video channels may be transmitted in a single 6.0 MHz bandwidth. Digitizing the downstream video signal also allows for data communication on the same 6.0 MHz channel.

The head end of a cable TV network contains equipment that is connected to the downstream cable network. In the downstream transmission of analog video channels, relatively simple converter equipment converts the radio signals broadcast through the air to radio frequency (RF) signals suitable for transmission over the network. Each video channel of the multiple video channels being transmitted to the cable network is frequency division multiplexed to take advantage of the bandwidth capacity of the network.

When an external video signal, received at the head end is digitized and compressed according to the MPEG standard, the head end equipment also modulates the digitized video signal and provides packet headers to the digitized video signals according to the MPEG protocol.

In the 1980's, the cable TV companies installed optical fiber cables that offered improvements to the cable network in both quality, by among other things, enhancing the signal to noise (S/N) ratio, and in capacity, by providing greater transmission bandwidth for video signals. The initial deployment of these optical fiber cables was limited to an optical fiber-based backbone, typically, corresponding to the main trunks of the existing coaxial network tree because of the expense in laying the optical cable. This optical fiber-based backbone was then connected to coaxial cables of the subtrunks and feeders of the network tree to form a hybrid fiber coaxial (HFC) network.

The higher capacity of a hybrid fiber-coaxial (HFC) cable system offers the cable operator an opportunity to provide enhanced services, for example, pay per view or connection to the Internet, when the two-way transmission of digital data between the head end of the cable system and the subscriber is provided. Two-way data transmission is extremely attractive to the cable operator because the HFC cable system can transmit digital data at rates thousands of times faster than is possible over the competitors' telephone lines.

Both coaxial and HFC cable systems have been used for the two-way transmission of digital data according to the DOCSIS (Digital Over Cable Interface Specification) standard. The DOCSIS standard is outlined in part, in "Data-Over-Cable Service Specifications Radio Frequency Interface SP-RF1-104-980724" and is supported by the CableLabs, a consortium of cable TV operators. The digital data may be Internet data, or digital audio and video data from one or more external sources to the cable TV system network. The DOCSIS standard assigns downstream transmissions to a bandwidth of 88 to 860 MHz, while upstream DOCSIS transmissions may be assigned to a bandwidth of 5 to 42 MHz.

The DOCSIS interface standard corresponds to the data link and physical layers of the well-known ISO/OSI (International Organization for Standardization Open Systems Interconnection) reference model, a layered architecture that standardizes levels of service and types of interaction for digital processors exchanging information through a communications network. The DOCSIS layers are defined as: an IP (Internet Protocol) network layer; a data link layer comprising a logical link control sublayer conforming to Ethernet Standards, a link security sublayer for basic privacy, authorization and authentication, and a Media Access Control (MAC) sublayer for operation supporting variable length protocol data; and a physical layer comprising a downstream convergence layer conforming to MPEG and a physical media dependent sublayer.

The digital data is formatted into packets under the MAC protocol and access to transmission follows Time Division Multiple Access (TDMA) in the upstream direction. TDMA separates multiple communication transmissions, over the finite frequency bandwidth of the cable TV network. TDMA assigns a frequency bandwidth for each communication and assigns a specific time slot for transmission. A formatted packet of information is transmitted during an assigned timeslot.

The two-way transmission of digital data, as described above, requires greater functionality and cost for the cable modem termination system (CMTS) at the cable operator's head end and the subscriber's set-top box, which must now include a cable modem. These increased costs are, of course, passed on to the subscriber.

The two-way DOCSIS communication may also specify that for the system to become operational, mandatory servers must interface the CMTS and the subscriber's cable modem deployments. These mandatory servers may include: a dynamic host configuration protocol server that provides needed IP addresses for both the cable modem and the subscriber's computers, which are connected to the cable modem; a time of day server; and a trivial file transfer protocol server for the purpose of registering and downloading cable modem configuration files for individual subscribers. Such increased functionality of the CMTS further requires a more complicated and expensive device.

The DOCSIS specification for two-way communication may also specify a cable modem registration process. When initially powered on, the subscriber's cable modem scans the downstream spectrum for a compatible RF channel carrying data adhering to DOCSIS physical characteristics. The CMTS, at the head end, may periodically broadcast upstream channel descriptors (UCD) over the downstream channel, from which the cable modem will learn its assigned upstream operational frequency. The cable modem of such a system has now established both an upstream and a downstream frequency.

The DOCSIS specification may further require the CMTS to periodically transmit upstream bandwidth allocation maps (MAP) in shared time slots in the downstream direction. The CMTS may then assign a temporary service identifier (SID) to the cable modem and begin a time synchronization process between itself and the CMTS. Subsequently, other DOCSIS specified processes may complete the cable modem registration process.

Conventional set-top boxes contain three RF interfaces. Two interfaces are required for upstream and downstream communication with the head end equipment, which may be a DOCSIS CMTS, and the third interface is required for tuning to the user-selected 6.0 MHz video channel. For a DOCSIS based set-top box this configuration is expensive since it requires two downstream RF tuners and demodulation means. There remains a need for a low cost cable TV system that provides two-way digital data communication between a comparatively simple head end of a cable network including a cable modem termination system (CMTS) and a low cost set-top box using but a single downstream RF tuner.

### SUMMARY OF THE INVENTION

Various exemplary embodiments of the present invention provide a low cost cable TV system for two-way digital data communication between a comparatively simple head end of a cable network including a cable modem termination system (CMTS) and a low cost set-top box using but a single downstream tuner.

An aspect of an exemplary embodiment of the present invention provides a cable network comprising a head end that receives digitized data and a plurality of digitized video channels from external sources, a cable modem termination system that converts the digitized data according to a Data Over Cable System Interface Standard (DOCSIS) to produce a DOCSIS digitized data channel for transmission over a downstream channel, a multiplexer that multiplexes the DOCSIS digitized data channel for transmission over the downstream channel with the plurality of digitized video channels to form a plurality of downstream output channels, each of the plurality of downstream output channels including DOCSIS broadcast data and a filtered selection of unicast data, and a set-top box that includes a single downstream tuner, the single downstream tuner selecting one of the plurality of downstream output channels comprising the filtered selection of unicast data, the DOCSIS broadcast data, and one of the corresponding plurality of digitized video channels.

Another aspect of an exemplary embodiment of the present invention provides a cable network comprising a head end that receives a plurality of digitized data channels including unicast digitized data and a plurality of digitized video channels from external sources, a cable modem termination system that converts the plurality of digitized video channels to a Moving Picture Experts Group (MPEG) format for downstream transmission over a corresponding plurality of downstream output channels according to a Data Over Cable System Interface Standard (DOCSIS) and that transmits the unicast digitized data downstream over the plurality of downstream output channels according to the DOCSIS standard, and a set-top box that includes a single downstream tuner, the single downstream tuner selecting one of the plurality of downstream output channels including the unicast digitized data and accessing the unicast digitized data according to MAC mapping message (MAP) data associated with the set-top box.

Yet another aspect of an exemplary embodiment of the present invention provides a cable network comprising a head end that receives a plurality of digitized data channels including unicast digitized data and broadcast data, and a plurality of digitized video channels from external sources, a cable modem termination system including a plurality of blades, each of the plurality of blades transmitting downstream a portion of the unicast digitized data of one of the plurality of digitized data channels according to a DOCSIS standard, a video multiplexer that multiplexes, aggregates, and transmits the unicast digitized data from each of the plurality of blades transmitting a portion of the unicast digitized data to a corresponding one of a plurality of filter/multiplexers according to the unicast digitized data for transmission downstream by a plurality of downstream output channels, and a set-top box comprising a single downstream tuner that selects one of the plurality of downstream output channels, and a cable modem that receives only unicast data associated with identifying Media Access Control (MAP) data for the set-top box.

### BRIEF DESCRIPTION OF THE DRAWINGS

Exemplary embodiments of the present invention are discussed hereinafter in reference to the drawings, in which:

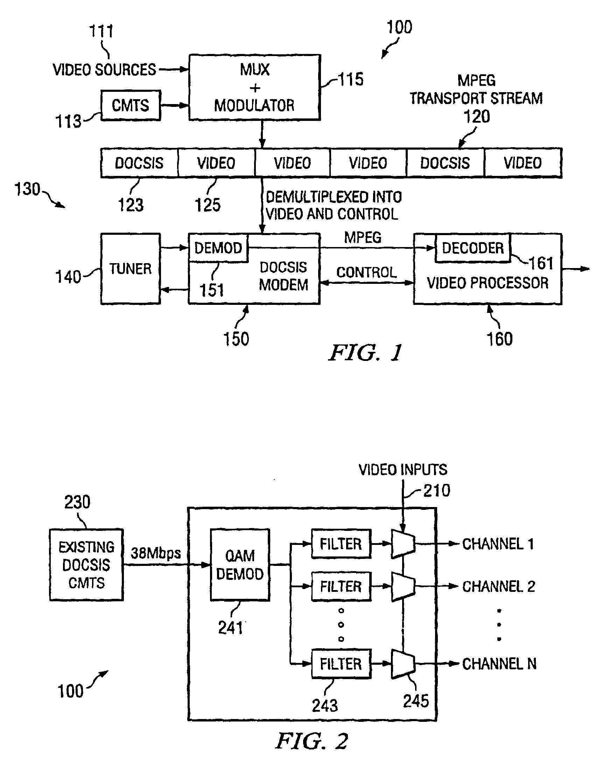

Figure 1 illustrates a schematic of a model system 100 including a head end 110 of the cable system, an MPEG transport stream, and a set-top box 130 of the customer premises equipment, which comprises a single tuner 140 for selecting video and data over cable in an exemplary embodiment of the present invention; and
Figure 2 illustrates a schematic of an internal functionality of the head end 100 of the cable system that allows DOCSIS digitized data received from multiple sources external to the cable network to be unicast to a subscriber over a particular downstream video channel in an exemplary embodiment of the present invention; and

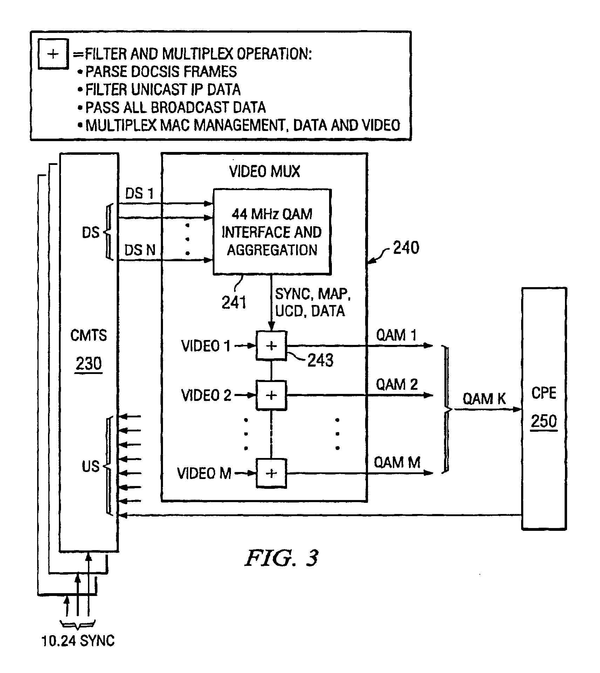

Figure 3 illustrates a schematic of cable system using multiple blades of a cable modem termination system 230 to provide broadcasting of a multiplexed video and data downstream channel in an exemplary embodiment of the present invention.

### DETAILED DESCRIPTION OF EXEMPLARY EMBODIMENTS

Generally, an exemplary embodiment of the present invention provides for a set-top box including a single downstream tuner for receiving video and data over cable. Various exemplary embodiments of the present invention relate to a cable modem termination system at the head end of a cable network, which may transmit DOCSIS digitized data from a source external to the cable network downstream to a cable subscriber's set-top box over a tuner-selected downstream channel.

Figure 1 illustrates a system model of an exemplary embodiment of the present invention. As is well known in the art, at the head end 110 of the cable system, video sources 111 external to the cable system may be received, digitized and converted to an MPEG format for transmission to the subscriber.

As is well known in the art, the downstream transmission bandwidth may include a plurality of downstream channels, each of the plurality of downstream channels comprising, for example, a 6 MHz bandwidth. As is also well known in the art, each 6 MHz downstream channel bandwidth may contain a band for video data and a sideband.

In this exemplary embodiment of the present invention, the head end 110 of the cable system may include a cable modem termination system (CMTS) 113 that may receive digitized data, for example, Internet data. As is well known in the art, the digitized data may be formatted according to a Media Access Control (MAC) protocol appropriate to the cable modem termination system 113 of the head end 110. The formatted digitized data may then be transmitted downstream from the head end 110 to the subscriber in a downstream data band corresponding to a single downstream channel of the plurality of downstram channels according to a Data Over Cable System Interface Standard (DOCSIS).

As is well known in the art, the downstream data may be formatted according to the MPEG frame format or according to the Media Access Control (MAC) protocol appropriate to the cable modem termination system 113 of the head end 110 and according to the Data Over Cable System Interface Standard (DOCSIS).

As also illustrated in Figure 1, both the MPEG data packets 123 and the digitized DOCSIS data packets 125 may then be modulated and multiplexed according to a Time Division Multiple Access protocol at the head end 110 of the cable system to form an MPEG transport stream 120.

The MPEG transport stream 120 is then demultiplexed into data streams containing either MPEG data or digitized DOCSIS data by the customer premises equipment.

As further illustrated in Figure 1, the set-top box 130 of the customer premises equipment may comprise a single downstream tuner 140 that tunes or selects a single downstream channel from the plurality of downstream channels transmitted by means well known in the art. In an exemplary embodiment of the present invention, the single tuner 140 may select that single downstream channel in which the DOCSIS digitized data is contained. Thus, the single tuner 140 may tune for or select the single downstream channel containing the digitized data from the plurality of downstream channels transmitted by the head end 110 of the cable system.

When selected to that single downstream channel containing the digitized data, the single tuner 140 may provide the digitized data to a DOCSIS modem 150, which demodulates the single downstream channel by demodulator 151. Furthermore, upstream communication for the DOCSIS modem 150 may be accomplished by using the 5-42 MHz bandwidth, which is disparate from the bandwidth of the downstream channels.

The MPEG data is demultiplexed from the same MPEG transport stream that carries the DOCSIS data by a demultiplexer and transmitted to decoder 161 of the video processor 160. The selected downstream channel is then transmitted to the customer premises equipment for video viewing.

The various exemplary embodiments described above may provide a lowest possible cost for the customer premises equipment by using a set-top box 130 with but a single tuner 140 that may tune for either digitized data comprising of MPEG data for video viewing or DOCSIS data multiplexed in the same MPEG transport stream. In addition, the head end 110 of the cable system may use a relatively simple downstream transmission scheme because it uses one of the existing plurality of downstream channels to transmit the digitized data.

Figure 2 illustrates another exemplary embodiment of the present invention that modifies the exemplary embodiment illustrated in Figure 1 by adding-on functionality to the head end 100 of the cable system. In this exemplary embodiment of the present invention, the added-on functions to the head end 100 of an existing cable network may allow digitized data from multiple external sources to be unicast, i.e., communicated from point-to-point, over multiple downstream channels to individual subscribers. Hence, the number of subscribers to which digitized data according to a DOCSIS standard may be unicast may be increased.

In Figure 2, the cable modem termination system 230 of the cable modem termination system (CMTS) 230 of the head end 100 of this exemplary embodiment outputs digitized data from multiple external sources at a rate of about 38 Mbps according to a DOCSIS standard. This rate of data transmission may be combined with selection of a short interleaver to minimize latencies. The unicast data, may be formatted according to a Media Access Control (MAC) protocol appropriate to the CMTS 230 of the head end 100 and according to the DOCSIS standard.

The head end 100 of the cable network may also receive multiple external video sources that are then digitized and compressed by a MPEG standard.

In the exemplary embodiment illustrated by Figure 2, a QAM (Quadrature Amplitude Modualtion) demodulator 241 may demodulate the digitized data having a transmission rate of about 38 Mbps by using variations in signal amplitude and phase as is well known in the art. The demodulated digitized data may be filtered to a particular downstream transmission channel according to DOCSIS unicast data, i.e., data which includes, for example, upstream bandwidth allocation map (MAP) data corresponding to an individual subscriber. Thus, digitized DOCSIS data destined for a particular subscriber may be unicast over a particular downstream channel, which is selected by a filter 243 acting upon subscriber identification data, such as, for example, MAP. The filtered DOCSIS data for each downstream transmission channel may also include synchronization data (SYNC) and other control data well known to those in the art for fulfilling the DOCSIS standard.

In various exemplary embodiments, the filtered DOCSIS unicast data from each filter is then transmitted to a corresponding multiplexer 245 that time division multiplexes the MPEG compressed video data with the filtered DOCSIS data to a corresponding downstream channel for transmission over the cable network. Alternatively, in another exemplary embodiment, the multiplexer 245 may be replaced by a statistical multiplexer, which may allocate shares of the available downstream transmission bandwidth dynamically, i.e., assigning channels only to devices which are active and seeking to communicate. Such dynamic allocation of bandwidth may increase the number of subscribers that may communicate with the head end 100 of the cable system.

Figure 3 illustrates yet another exemplary embodiment that modifies the head end of the present invention, such that, multiple blades of a cable modem termination system (CMTS) 230, allow a DOCSIS management downstream bandwidth to be shared between all users regardless of which video channel is selected.

In this exemplary embodiment of the present invention, each of the blades of the distributed CMTS 230 may include a downstream output (DS1-DSₙ) of digitized data according to a DOCSIS standard, which may then be transmitted to a quadrature amplitude modulator and aggregator 241 within a downstream video multiplexer 240. All broadcast data, such as, for example, synchronization signals (SYNC), upstream bandwidth allocation map (MAP), upstream channel descriptors (UCD), and control data from the multiple blades may also be aggregated by the multiplexer and broadcast to all QAM channels in this exemplary embodiment of the invention.

In Figure 3, the digitized unicast and broadcast data may be transmitted to a plurality of filters and associated multiplexers 243, which correspond to the plurality of downstream video transmission channels (QAM 1 - QAM m). In various exemplary embodiments, each of the plurality of filters 243 may filter the digitized data according to DOCSIS broadcast and unicast data, i.e., data which may include, for example, upstream bandwith allocation map (MAP) data and unicast data corresponding to an individual subscriber, and multiplex the digitized data with a corresponding video data signal (Video 1 - Video m).

As shown in Figure 3, a particular customer premises equipment 250 may only recognize that digitized DOCSIS data that is transmitted downstream on video transmission channel (QAM k), which contains, for example, a MAP message adhering to the DOCSIS physical characteristics and identified with the particular customer premises equipment 250. In addition, upstream communication from the customer premises equipment 250 may occur only by a hardwired, i.e., a fixed frequency bandwidth, upstream channel that is identified by, for example, the MAP message.

In various exemplary embodiments, a MAP message adhering to the DOCSIS standard may include an 8-bit upstream channel identification field. This 8-bit upstream channel identification field may in turn comprise a "most significant bit (MSB) address" of the 14-bit service identifier field (SID). Hence, each physical upstream channel of this exemplary embodiment of the present invention may be divided into 256, i.e., 2⁸, logical channels specified by the 8-bit upstream channel identification field.

In various exemplary embodiments, the cable modem termination system (CMTS) 230 of Figure 3 may transmit downstream up to 256 MAP messages. Each cable modem of a particular customer premises equipment 250, however, receives only those MAP messages with which it is identified and ignores all other MAP messages.

In various exemplary embodiments, the cable modem of the customer premises equipment will use only its MAP to transmit upstream bursts of DOCSIS digitized data to the CMTS 230 of the head end of the cable system. Thus, the CMTS distinguishes received upstream DOCSIS digitized data bursts by a combination of logical-to-physical information, i.e., a particular upstream physical channel associated with a particular MAP message, a particular upstream channel identifier and service identifier.

Because many varying and different exemplary embodiments may be made with the scope of the inventive concepts taught herein, and because many modifications may be made in the exemplary embodiments detailed herein in accordance with the descriptive requirements of the law, it is to be understood that the detailed descriptions herein are to be interpreted as illustrative and not in a limiting sense.

## Claims

1. A cable network comprising:
a head end that receives digitized data and a plurality of digitized video channels from external sources;
a cable modem termination system that converts the digitized data according to a Data Over Cable System Interface Standard (DOCSIS) to produce a DOCSIS digitized data channel for transmission over a downstream channel;
a multiplexer that multiplexes the DOCSIS digitized data channel with the plurality of digitized video channels to form a plurality of downstream output channels, each of the plurality of downstream output channels including DOCSIS broadcast data and a filtered selection of unicast data; and
a set-top box that includes a single downstream tuner, the single downstream tuner selecting one of the plurality of downstream output channels comprising the filtered selection of unicast data, the DOCSIS broadcast data, and one of the corresponding plurality of digitized video channels.

2. The cable network of claim 1, wherein the DOCSIS digitized data channel comprises a plurality of DOCSIS digitized data channels.

3. The cable network of claim 2 further comprising:
a DOCSIS modem that demodulates the DOCSIS digitized data channel when the single tuner selects the one of the plurality of downstream output channels and that modulates upstream digital data to the head end of the cable network on an upstream band.

4. The cable network of any preceding claim, wherein the plurality of digitized video channels are formatted to an MPEG format and are multiplexed with the DOCSIS digitized data channel according to a time division multiple access protocol to form an MPEG transport stream for downstream transmission.

5. The cable network of claim 4 further comprising:
a video processor that receives the one of the correspond plurality of digitized video channels from the demodulator of the DOCSIS modem, when the single downstream tuner selects the one of the plurality of downstream output channels, the video processor including a video decoder that decodes MPEG format.

6. The cable network of any preceding claim, wherein an output of the cable modem termination system (CMTS) is filtered, according to unicast data, by one of a plurality of filters to produce filtered data for a corresponding one of the plurality of downstream output channels corresponding in number to the plurality of filters for downstream transmission to a subscriber.

7. The cable network of claim 6, wherein the filtered data comprises MAC management messages.

8. The cable network of claim 6 or 7, wherein DOCSIS digitized data on the DOCSIS digitized data channel includes MAP data specifying time division multiple access (TDMA) control information for upstream transmission.

9. The cable network of claim 8, wherein the MAP data comprises an 8 bit field for an upstream channel identification.

10. The cable network of claim 8 or 9, wherein the 8 bit field is regarded as the most significant bit of a 14 bit service identifier field of the MAP data.

11. The cable network of any of claims 8 to 10, wherein the cable modem termination system transmits up to 256 MAP messages with different upstream channel identifiers.

12. The cable network of any of claims 8 to 11 wherein the cable modem of the set-top box uses its own MAP, which is identified by the upstream channel identifier, to transmit upstream bursts of digitized data.

13. The cable network of claim 12, wherein the cable modem termination system uses the logical addressing of the received MAP data and the upstream channel identifier to identify bursts of digitized information from a corresponding set-top box.
